# EUROPÄISCHE PATENTANMELDUNG

(11) **EP 3 193 221 A1**
(43) Veröffentlichungstag der Anmeldung: **19.07.2017**
(21) Anmeldenummer: 16151449.2
(22) Anmeldetag: 15.01.2016
(51) Int. Cl.: G05B 19/042

(54) **SIGNALPFADÜBERPRÜFUNGSVORRICHTUNG**

(71) Anmelder: dSPACE digital signal processing and control engineering GmbH, 33102 Paderborn (DE)
(72) Erfinder: Gilles, Rafael, 33106 Paderborn (DE)

(57) **Zusammenfassung**

Gemäß eines erfindungsgemäßen Verfahrens wird eine Eingabe-/Ausgabeschnittstelle einer Testvorrichtung konfiguriert, wobei die Eingabe-/Ausgabeschnittstelle zum Verbinden einer Hardware mit einem in der Testvorrichtung vorhandenen Verhaltensmodell ausgeprägt ist. Das Verfahren weist dabei die folgenden Schritte auf: Anzeigen einer graphischen Repräsentation der Eingabe-/Ausgabeschnittstelle als Signalpfad zwischen einem Hardware-Port zur Anbindung der Hardware und mindestens einem Modell-Port zum Anbinden des Verhaltensmodells über eine auswählbare Eingabe-/Ausgabefunktion. Empfangen einer ersten Konfiguration für den Signalpfad. Empfangen eines Testwertes der an dem Hardware-Port oder dem Modell-Port des Signalpfads vorgebbar ist, insbesondere aber auch vorgebbar ist über die graphische Repräsentation des Hardware-Port oder dem Modell-Port. Propagieren eines mit dem Testwert assoziierten Testsignals entlang des Signalpfads gemäß der ersten Konfiguration für den Signalpfad, Anzeigen des propagierten Testsignals an der graphischen Repräsentation des Modell-Port beziehungsweise des Hardware-Port.

## Beschreibung

### Gebiet der Erfindung

Die vorliegende Erfindung betrifft die Entwicklung von Steuergeräten, wie sie z. B. in der Automobilindustrie oder in der Luftfahrtindustrie zur Steuerung von technischen Systemen, wie z. B. Motoren oder Bremsen, verwendet werden. Insbesondere betrifft die vorliegende Erfindung Testgeräte, die im Entwicklungsprozess von Steuergeräten verwendet werden.

### Hintergrund

Die Entwicklung von Steuergeräten ist zu einem hoch komplexen Prozess geworden. So sollen neue Steuergeräte bzw. neue Steuerfunktionen so früh wie möglich im Entwicklungsprozess getestet werden, um die generelle Funktionalität zu überprüfen und die weitere Entwicklungsrichtung vorzugeben. Gegen Ende des Entwicklungsprozesses ist es wichtig, das schon weit entwickelte Steuergerät möglichst umfassend zu testen, um aufgrund der Testergebnisse notwendige Modifikationen vorzunehmen, bevor das Steuergerät in Benutzung bzw. in Serienfertigung geht und im späteren Betrieb unter allen Umständen wie gewünscht arbeitet.

Im Rahmen der vorliegenden Erfindung wird unter Testgerät bzw. Testvorrichtung ein Gerät verstanden, welches die Signalübertragung zwischen einem Software-Modell und einer an das Testgerät angeschlossenen externen Hardware, z.B. ein Steuergerät, ermöglicht.

Zwei beispielhafte Schritte des Entwicklungsprozesses, an denen Testgeräte zum Testen des Steuergeräts zum Einsatz kommen, werden nachfolgend beschrieben. Zu einem recht späten Stadium des Entwicklungsprozesses kommen sog. Hardware-in-the-Loop Simulatoren (HIL-Simulatoren) zum Einsatz. Solche HIL-Simulatoren enthalten ein Modell des zu steuernden und/oder zu regelnden technischen Systems, wobei das Modell in Software vorliegt. Der HIL-Simulator enthält weiterhin eine elektrische Eingabe-/Ausgabe-Schnittstelle, an die das schon weit entwickelte, bereits in Hardware gegenständlich vorhandene Steuergerät angeschlossen werden kann. In verschiedenen Simulationsdurchläufen kann nun die Funktionalität des Steuergeräts getestet werden, wobei die Reaktionen des Modells des zu steuernden technischen Systems auf die Signale des Steuergeräts sowie die Reaktionen des Steuergeräts auf von dem Modell des zu steuernden technischen Systems vorgegebene Ereignisse beobachtet werden können. Dabei können sowohl der normale Betrieb als auch Fehler in dem zu steuernden technischen System als auch Fehler in dem Steuergerät simuliert werden.

Demgegenüber ist das sogenannte Rapid Control Prototyping (RCP) ein Entwicklungsschritt, der weiter am Anfang des Entwicklungsprozesses steht. Beim RCP kommt das Testgerät auf Seiten des Steuergeräts zum Einsatz. Anders ausgedrückt nimmt das Testgerät beim Rapid Control Prototyping die Rolle eines Prototypen des in Entwicklung befindlichen Steuergerätes ein. Das Testgerät enthält ein Modell des zu testenden Steuergeräts. Aufgrund des frühen Entwicklungsstadiums ist das Modell des zu testenden Steuergeräts oftmals noch recht rudimentär im Vergleich zu dem späteren finalen Steuergerät. In manchen Fällen kann das Modell aber auch technisch sehr nah oder hinsichtlich der Software sogar weitgehend identisch zu dem finalen Steuergerät sein. Oftmals ist noch keine Hardware-Implementierung des Steuergeräts vorhanden, vielmehr ist das in dem Testgerät vorhandene Modell des zu testenden Steuergeräts ein Software-Modell. Das Testgerät kann über eine Eingabe-/Ausgabe-Schnittstelle mit dem zu steuernden technischen System selbst oder mit dem bisher vorhandenen Steuergerät für das zu steuernde technische System verbunden werden. Im ersten Fall besteht eine direkte Verbindung zwischen dem zu testenden Steuergerät, in der Form eines Software-Modells, und dem gegenständlich vorhandenen, zu steuernden technischen System. Im zweiten Fall ist das bisher vorhandene Steuergerät das durch das RCP-Testgerät zu steuernde technische System. Diese Steuerung des bisher vorhandenen Steuergeräts führt zu einer Modifikation der Steuerverfahren des bisher vorhandenen Steuergeräts, wodurch neue Steuer-Funktionalität mittels des von außen angeschlossenen RCP-Testgeräts getestet werden kann, was auch als Bypassing bezeichnet wird.

In beiden genannten Beispielen (HIL-Simulator und RCP-Testgerät) gibt es ein Testgerät, in dem ein Software-Modell vorhanden ist, welches jeweils das Verhalten eines technischen Systems oder das Verhalten des Steuergeräts abbildet, und daher im Folgenden als Verhaltensmodell bezeichnet wird. Dieses Verhaltensmodell kann über die Eingabe-/Ausgabe-Schnittstelle mit einem externen Gerät verbunden werden, damit Tests durchgeführt werden können. In dem Fall von RCP enthält das Testgerät ein Verhaltensmodell des zu testenden Steuergeräts und wird mit dem zu steuernden technischen System, z.B. einem Motor/Kraftfahrzeug verbunden. In dem Fall von HIL enthält das Testgerät ein Verhaltensmodell des zu steuernden technischen Systems, z.B. Motormodell, und wird mit dem zu testenden Steuergerät verbunden.

Wie bereits angedeutet, verfügt das Testgerät über eine Eingabe-/Ausgabe-Schnittstelle, über die das Testgerät, je nach Anwendungsfall, mit dem zu steuernden technischen System bzw. mit dem zu testenden Steuergerät verbunden wird. Diese Eingabe-/Ausgabe- Schnittstelle wird in dem Testgerät mit dem in dem Testgerät vorhandenen Verhaltensmodell verbunden, so dass das Verhaltensmodell über die Eingabe-/Ausgabe-Schnittstelle mit der jeweiligen Hardware kommunizieren kann. Für diese Verbindung des Verhaltensmodells mit der Eingabe-/Ausgabe-Schnittstelle verfügt das Testgerät über eine Mehrzahl von Eingabe-/Ausgabe-Funktionen. Diese Eingabe-/Ausgabe-Funktionen stellen das Bindeglied zwischen dem Verhaltensmodell auf der einen Seite und der gegenständlichen Eingabe-/Ausgabe-Schnittstelle auf der anderen Seite dar. Ein und dasselbe Testgerät kann für verschiedene Simulationen verwendet werden. In anderen Worten, ein und dasselbe Testgerät kann mit verschiedenen in dem Testgerät vorhandenen Verhaltensmodellen und mit verschiedenen an das Testgerät angeschlossener zu testender Hardware verwendet werden. Es ist ersichtlich, dass für verschiedene angeschlossene Geräte/Systeme und für verschiedene Verhaltensmodelle unterschiedliche Kanäle der Eingabe-/Ausgabe-Schnittstelle und unterschiedliche Eingabe-/Ausgabe-Funktionen erforderlich sind.

Da es sich um eine Vielzahl von Verbindungen handelt, für die jeweils Eigenschaften für die Eingabe-/Ausgabesignale festgelegt werden müssen, ist es wünschenswert die Erstellung der Verbindung nach einer ersten Konfiguration der Signalpfade zwischen Hardware und Verhaltensmodell über ausgewählte und konfigurierte Eingabe-/Ausgabeschnittstellen überprüfen zu können.

Im Rahmen der vorliegenden Erfindung sind unter Konfiguration unter anderem Angaben über den Datentyp, Wertebereich, Auflösung, und/oder die Einheit eines Signalwertes zu verstehen. Weiterhin sind unter Konfiguration auch Signalbreiten, Signal-Grenzwerte oder auch skalierende Anpassungen des Signals, z.B. durch lineare oder allgemeine mathematische Funktionen oder mit Hilfe von Lookup-Tabellen, zu verstehen. Sollte es diesbezüglich Unstimmigkeiten zwischen Hardware-Port und zugehörigem Modell-Port geben, kann eine Anpassung, z.B. ein typecasting, also eine Umwandlung des Datentyps eines Signals, über die Eingabe-/Ausgabefunktion von Nöten sein. Unter Modell-Port und Hardware-Port werden im Rahmen dieser Erfindung z.B. Eingänge oder Ausgänge von Konfigurationseinrichtungen für eine Hardware-Komponente oder ein Modell verstanden, wobei die Konfigurationseinrichtungen z.B. als Blöcke eines Konfigurations-Blockdiagramms ausgeprägt sein können.
Bei der Komplexität heutiger eingebetteter Systeme kann sich die Konfiguration einer solchen Testvorrichtung auf eine Vielzahl von Eingabe-/Ausgabeschnittstellen erstrecken. Um die anzuschließende Hardware nicht durch eine Fehlkonfiguration zu gefährden, indem zum Beispiel eine maximale Ausgabespannung überschritten wird, da ein Datentyp falsch gewählt wurde, wird üblicherweise eine Messhardware verwendet, um Ausgabewerte an den Hardwarepins nach Durchlauf einer Simulation des Verhaltensmodells zu messen und überprüfen. Liegt ein Ausgabewert nicht innerhalb der erwarteten Parameter, muss nach einer fehlerhaften Konfiguration gesucht werden.

Dieses Verfahren aus Messen und Konfigurationsanpassung kann somit nur bei Vorhandensein des Testgeräts erfolgen und kann ferner eine Vielzahl von Simulationsdurchläufen erfordern, was einen großen zeitlichen Aufwand bedeuten kann.

Aufgabe der vorliegenden Erfindung ist es daher ein verbessertes Verfahren zum Konfigurieren einer Testvorrichtung bereitzustellen.

### Die Erfindung im Überblick

Die vorliegende Erfindung umfasst ein Verfahren zum Konfigurieren einer in einer Testvorrichtung befindlichen Eingabe-/Ausgabeschnittstelle zum Verbinden einer Hardware mit einem in der Testvorrichtung vorhandenen Verhaltensmodell, wobei das Verfahren folgende Schritte aufweist:
- Anzeigen einer graphischen Repräsentation der Eingabe-/Ausgabeschnittstelle als Signalpfad zwischen einem Hardware-Port zur Anbindung der Hardware und mindestens einem Modell-Port zum Anbinden des Verhaltensmodells über eine auswählbare Eingabe-/Ausgabefunktion;
- Empfangen einer ersten Konfiguration für den Signalpfad;
- Empfangen eines Testwertes vorgebbar an dem Hardware-Port oder dem Modell-Port des Signalpfads, insbesondere vorgebbar über die graphische Repräsentation des Hardware-Port oder dem Modell-Port;
- Propagieren eines mit dem Testwert assoziierten Testsignals entlang des Signalpfads gemäß der ersten Konfiguration für den Signalpfad,
- Anzeigen des propagierten Testsignals, vorzugsweise Anzeigen des propagierten Testsignals an der graphischen Repräsentation des Modell-Port beziehungsweise des Hardware-Port.

Der Erfindung liegt die Erkenntnis zu Grunde, dass eine umgehende Überprüfung einer Signalpfadkonfiguration zur Vorbereitung einer HIL- oder RCP-Simulation eine eventuelle Gefährdung der anzuschließenden Hardware vermeidet, ohne dabei aufwendige Messungen mit externen Messapparaturen durchführen zu müssen. Ferner ermöglicht es die Erfindung bei komplexen Anwendungen bereits Teilkonfigurationen direkt überprüfen zu können, während im herkömmlichen Verfahren erst die vollständige Konfiguration - ggf. von unterschiedlichen Personen - vorgenommen werden muss, um anschließend in Testläufen die Ausgabewerte der vollständigen Simulation an den I/O-Pins der Hardware messen zu können. Die Erfindung ermöglicht damit eine flexiblere Konfiguration einer Testvorrichtung für HIL-Simulatoren oder für das Rapid Prototyping, die sogar bereits ohne ein Vorhandensein der anzuschließenden Hardware bzw. des Testgeräts bereits auf ihre Richtigkeit hin überprüft werden kann. Dies ermöglicht eine effiziente Gestaltung der unterschiedlichen Testphasen für Steuergeräte jeglicher Art.
Nach einer (Teil-)Konfiguration der Testvorrichtung kann an einem beliebigen Ende eines Signalpfads, also am Hardware-Port oder am Modell-Port, mindestens ein, aber auch mehrere Testwerte vorgegeben werden. Zum Beispiel kann am Hardware-Port eine Spannung von 5V vorgegeben werden. Erfindungsgemäß wird dieses Testsignal gemäß der vorgegebenen Signalpfadkonfiguration über die Eingabe-/Ausgabefunktion bis zum Modell-Port propagiert. Das so erhaltene Testsignal wird in einer graphischen Repräsentation am Modell-Port angezeigt. Testwert umfasst dabei sowohl eine betragsmäßige Angabe als auch weitere Informationen wie die Einheit, den Datentyp oder andere den zahlenmäßigen Betrag näher beschreibende Angaben. Das propagierte Testsignal wird vorzugsweise an der graphischen Repräsentation des Modell-Port beziehungsweise des Hardware-Port angezeigt. Unter bestimmten Bedingungen ist es aber auch vorteilhaft, dass das propagierte Testsignal an beliebigen Stellen des Signalpfads angezeigt wird. Damit können Stellen im Signalpfad identifiziert werden, an denen eine fehlerhafte Konfiguration vorliegen könnte.

In einer vorteilhaften Ausführungsform der vorliegenden Erfindung umfasst die Konfiguration des Signalpfades eine Angabe eines Datentyps, einer Skalierung des Eingabe-/Ausgabewertes, eine Konvertierung des Datentyps, einen Spannungs-/Strombereich eines dem Eingabe-/Ausgabewert zugeordnetem Hardwarekanals und/oder einer Einheit oder einer Auflösung eines Eingabe-/Ausgabewertes an dem Modell- und/oder Hardware-Port.

In einer weiteren Ausführungsform umfasst das Propagieren eine Propagation in den Treiber und Ausführen des Treibercodes,

In einer weiteren Ausführungsform der vorliegenden Erfindung umfasst das Propagieren:
- automatisches Codegenerieren aus dem Verhaltensmodell für eine Zugriffspunktfunktion gemäß der Signalpfadkonfiguration zum Zugreifen auf das Testsignal assoziiert mit dem Testwert,
- automatisches Codegenerieren für die Eingabe-/Ausgabefunktion gemäß der Signalpfadkonfiguration,
- Ausführen des generierten Codes ausgehend von dem Testwert, wobei das mit dem Testwert assoziierte Testsignal gemäß des generierten Codes propagiert wird, und Schreiben des propagierten Testsignals in einen definierten Speicher.

In der Modell-unterstützen Entwicklung eingebetteter Systeme ist die automatische Codegenerierung basierend auf einem graphischen Modell bekannt. Dabei werden Funktionalitäten für bestimmte Einheiten definiert, welche jeweils als graphische Blöcke zur Verfügung gestellt werden. Ferner existieren Vorschriften, wie für solche Blöcke Hardwarespezifischer Code zu generieren ist. Dieser hängt von Hardware-spezifischen Parametern ab, welche ggf. aus Bibliotheken geladen werden können oder auch einzeln konfigurierbar sind. Ferner sind für das Verhaltensmodell Zugriffspunktfunktionen definiert mittels derer auf Werte an die Simulation oder von dieser an ein externes Gerät kommuniziert werden können. Für eine solche Zugriffspunktfunktion wird gemäß der Signalpfadkonfiguration Code generiert, ebenso für die ausgewählte Eingabe-/Ausgabefunktion. Anschließend wird der generierte Code ausgeführt, wobei der Testwert als Ausgangspunkt der Codeausführung dient und das aus dem Testwert berechnete Testsignal entsprechend des generierten Codes entlang des Signalpfads propagiert wird, einschließlich ggf. notwendiger Datentypumwandlungen. Um auch nach der Simulation für die Analyse zur Verfügung zu stehen, wird das an das andere Ende des Signalpfads propagierte Testsignal in einen definierten Speicher geschrieben, welcher auch nach der Ausführung des Codes zur Verfügung steht.

In einer weiteren vorteilhaften Ausführungsform, umfasst das Anzeigen des propagierten Testsignals:
- Zugreifen auf das Testsignal im definierten Speicher und Zuordnen des Testsignals zum entsprechenden Port in der graphischen Repräsentation des Signalpfads.

In einer weiteren vorteilhaften Ausführungsform umfasst das Verfahren ferner:
- Aktivieren einer Hardwaresimulationseinheit zum Empfangen eines Eingangs- oder Ausgangssignals.

Ferner umfasst das Ausführen des generierten Codes:
- wenn der Testwert am Modell-Port vorgegeben wurde,
- Zugreifen auf den Testwert mittels der Zugriffspunktfunktion, welche ein entsprechendes Testsignal an die Eingabe-/Ausgabefunktion übergibt;
- Verarbeitung des Testsignals durch die Eingabe-/Ausgabefunktion und
- Schreiben des Testsignals in einen Speicher der Hardwaresimulationseinheit,
- und nach dem Ausführen des Programmcodes ein Anzeigen des im Speicher der Hardwaresimulationseinheit befindlichen Testsignals am entsprechenden Hardware-Port in der graphischen Repräsentation der Eingabe-/Ausgabeschnittstelle; oder
- wenn der Testwert am Hardware-Port vorgegeben wurde,
- Schreiben des Testwertes in einen Speicher der Hardwaresimulationseinheit,
- Auslesen des Testwertes durch die Eingabe-Ausgabefunktion, welche den Testwert als Testsignal an die Zugriffspunktfunktion übergibt;
- Umwandeln des Testsignals durch die Zugriffspunktfunktion, wobei die Zugriffspunktfunktion das umgewandelte Testsignal in einen zweiten Speicher schreibt;
- und nach dem Ausführen des Programmcodes Anzeigen des im zweiten Speicher befindlichen Testsignals am entsprechenden Modell-Port in der graphischen Repräsentation der Eingabe-/Ausgabeschnittstelle.

Mittels der Hardwaresimulationseinheit wird die I/O-Hardware (Eingabe/Ausgabe-Hardware) nachgebildet, welche analog zu der realen Hardware von den Eingabe-/Ausgabetreibern angesteuert wird. Das bedeutet, wenn das Testsignal am Modell-Port vorgegeben wird, dass mittels der Zugriffspunktfunktion ein Testsignal an die Eingabe/-Ausgabefunktion übergeben wird, diese das Signal unter eventuellen Anpassungen des Datentyps oder anderer Größen in einen Speicher der Hardwaresimulationseinheit schreibt.
Umgekehrt wird, wenn der Testwert am Hardware-Port vorgegeben wird, der Testwert aus einem Speicher der Hardwaresimulationseinheit gelesen, und behandelt als wäre der Testwert ein Eingangssignal, welches über einen Kontakt der I/O-Hardware empfangen wurde. Das heißt, die Eingabe-/Ausgabefunktion liest den Testwert aus dem Speicher aus und gibt diesen gemäß der Signalpfadkonfiguration als entsprechendes Testsignal weiter an die Zugriffspunktfunktion. Diese wandelt das Testsignal gemäß Signalkonfiguration um und schreibt ihn in einen weiteren Speicher, auf den auch nach Ausführen des Codes zu Analysezwecken zugegriffen werden kann.

In einer weiteren vorteilhaften Ausführungsform ist der Testwert ein zeitlich veränderliches Signal, z. B. eine oszillierende Spannung oder ein digitales Signal wie beispielsweise ein TTL Signal (Transistor-Transistor-Logik-Signal).

Ein weiterer Aspekt der Erfindung bezieht sich auf eine Vorrichtung zum Konfigurieren einer Eingabe-/Ausgabeschnittstelle einer Testvorrichtung zum Verbinden einer Hardware und eines Verhaltensmodells; wobei die Vorrichtung aufweist: Mittel zum Anzeigen einer graphischen Repräsentation der Eingabe-/Ausgabeschnittstelle als Signalpfad zwischen einem Hardware-Port zur Anbindung der Hardware und mindestens einem Modell-Port zum Anbinden des Verhaltensmodells über eine auswählbare Eingabe-/Ausgabefunktion; Mittel zum Konfigurieren der Eingabe-/Ausgabeschnittstelle; Codegenerator zum Generieren ausführbaren Programmcodes für eine Zugriffspunktfunktion definiert im Verhaltensmodell und zum Generieren ausführbaren Programmcodes für die Eingabe-/Ausgabefunktion, wobei die Codegenerierung entsprechend der Signalpfadkonfiguration erfolgt. Ferner umfasst die Vorrichtung Mittel zum Eingeben eines Testwertes an einem der Hardware- oder Modell-Ports, und ist ausgebildet ein Signal basierend auf dem Testwert und gemäß dem generierten Code entlang des Signalpfads zu propagieren und vorzugsweise am gegenüberliegenden Modell-oder Hardware-Port über eine graphische Benutzeroberfläche auszugeben.
Mit Hilfe der Konfigurationsvorrichtung können Signalpfadkonfigurationen für Testvorrichtungen wie sie in HIL-Simulationen oder beim Rapid Prototyping verwendet werden, effizient überprüft werden. So erlaubt die Eingabe ausgewählter Testwerte eine Überprüfung bestimmter Signalpfadkonfigurationen unmittelbar nach deren Festlegung, ohne dass eine vollständige Konfiguration der gesamten Testvorrichtung notwendig ist, oder ein vollständiger Simulationsdurchlauf des Verhaltensmodells von Nöten wäre. Neben der Zeit- und Aufwandsersparnis kann somit auch eine eventuelle Gefährdung anzuschließender Hardware ausgeschlossen werden, da vorab überprüft werden kann, dass keine Ausgabesignale an die Hardware ausgegeben werden, welche durch Fehlkonfiguration zum Beispiel eine maximal Spannung überschreiten.

In einer vorteilhaften Ausführungsform der erfindungsgemäßen Vorrichtung umfasst die Konfiguration des Signalpfades einen Datentyp eines Eingabe-/Ausgabewertes an dem Modell-und/oder Hardware-Port und/oder eine Konvertierung des Datentyps und/oder eine Skalierung des Eingabe-/Ausgabewertes und/oder einen Spannungs-/Strombereich eines dem Eingabe-/Ausgabewert zugeordnetem Hardwarekanals.

In einerweiteren vorteilhaften Ausführungsform ist der Testwert ein zeitlich veränderliches Signal, z. B. eine oszillierende Spannung oder ein TTL Signal (Transistor-Transistor-Logik-Signal).

In einer weiteren vorteilhaften Ausführungsform der erfindungsgemäßen Vorrichtung weist die Vorrichtung ferner eine Hardwaresimulationseinheit auf, welche ein Register zum Speichern des Testwertes oder des propagierten Testsignals aufweist. Das Register wird dabei von der Eingabe-/Ausgabefunktion genauso verwendet wie die realen Register in der anzuschließenden Hardware.

### Detaillierte Beschreibung

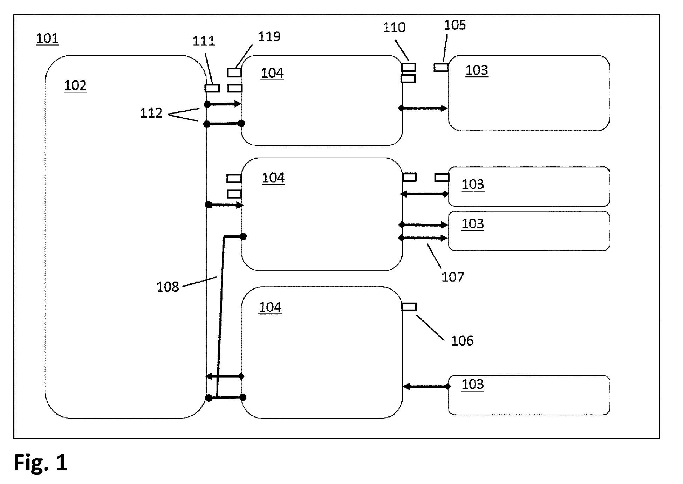

Beim Konfigurieren eines Signalpfads für eine Testvorrichtung, wie sie bei HIL Simulationen oder beim Rapid Prototyping verwendet wird, werden über eine graphische Benutzeroberfläche, wie sie in Figur 1 dargestellt ist, Signalpfade zwischen einer Hardwarekomponente 102, welche die anzuschließende Hardware mit ihren Eingangs- und Ausgangssteckern 240 abbildet und einem oder mehreren Verhaltensmodellkomponenten 103 definiert. Die Hardwarekomponente kann z. B. ein zu testendes Steuergerät sein. Die Hardwareanschlüsse 240 werden durch Hardware-Ports 111 in der graphischen Repräsentation abgebildet. Die Konfigurationsvorrichtung bietet die Möglichkeit eine Konfiguration der Hardware-Ports vorzunehmen, zum Beispiel die (elektrischen) Eigenschaften der IO-Hardware bzw. der Signalstecker/Kontakte dieses externen Gerätes, wie z.B. eine maximale Strombelastbarkeit oder eine Auflösung, z.B. eines Analog/Digital-Wandlers, anzugeben.

Der Hardwarekomponente 102 gegenüber sind eine oder mehrere Verhaltensmodellkomponenten 103 angeordnet, welche ein oder mehrere Modell-Ports 105 aufweisen, die ebenfalls mit einer bestimmten Konfiguration versehen werden können, z.B. dem Datentyp eines simulierten Signals, seine Auflösung usw. Je nach Konfiguration eines Modell-Ports 105 wird bei einer automatischen Codegenerierung für das Verhaltensmodell eine Zugriffspunktfunktion entsprechend der gewählten Konfiguration generiert.

Zum Verbinden der Hardware-Ports mit den Modell-Ports können aus einer Vielzahl von Eingabe-/Ausgabe-Funktionskomponenten 104 ein oder mehrere Eingabe-/Ausgabe-Funktionskomponenten ausgewählt werden und zwischen Hardwarekomponente 102 und Modellkomponente 103 eingebracht werden. Dabei können Hardware-Ports 111 mit hardwareseitigen Eingabe-/Ausgabe-Funktionsports 119 verbunden werden, wobei dies in der graphischen Benutzeroberfläche durch Verbindungslinien 112 zwischen den Ports abgebildet wird. Ebenso können modellseitige Eingabe-/Ausgabe-Funktionsports 110 mit Modell-Ports 105 verbunden werden, was ebenfalls über das Setzen einer Verbindungslinie 107 zwischen den Ports erzielt werden kann.

In einer HIL-Simulation oder beim RCP erfolgt dann entlang dieser definierten und konfigurierten Signalpfade der Signalaustausch zwischen der Hardware und dem Verhaltensmodell.

Sowohl für die Konfigurationsanteile vom Verhaltensmodell als auch für die Eingabe-/Ausgabe-Funktion besteht die Möglichkeit und oftmals auch die Notwendigkeit bestimmte Konfigurationen an den Verbindungsports vorzugeben. Bei einer späteren Codegenerierung zur Erzeugung ausführbaren Programmcodes für eine HIL-Simulation oder für das RCP werden die entsprechenden Eingabe-/Ausgabe-Funktionen entsprechend der vorgegebenen Konfiguration erzeugt. So kann es zum Beispiel sein, dass ein Datentyp eines Ausgabesignals des Verhaltensmodells nicht mit dem Datentyp eines erwarteten Eingangswertes der Eingabe-/Ausgabe-Funktion übereinstimmt, z.B. könnte vom Verhaltensmodell eine Gleitkommazahl ausgegeben werden, während von der Eingabe-/Ausgabefunktion ein Integer erwartet wird. In diesem Fall muss eine Datentypanpassung vorgenommen werden, was durch die Konfiguration der jeweiligen Ports vorgegeben wird. Ferner können Skalierungen (u.a. Wertebereich und Auflösung) der Datenwerte konfiguriert werden. Bei der Komplexität heutiger eingebetteter Systeme kann sich die Konfiguration auf eine Vielzahl von Komponenten erstrecken, deren Konfiguration jeweils anzupassen ist.

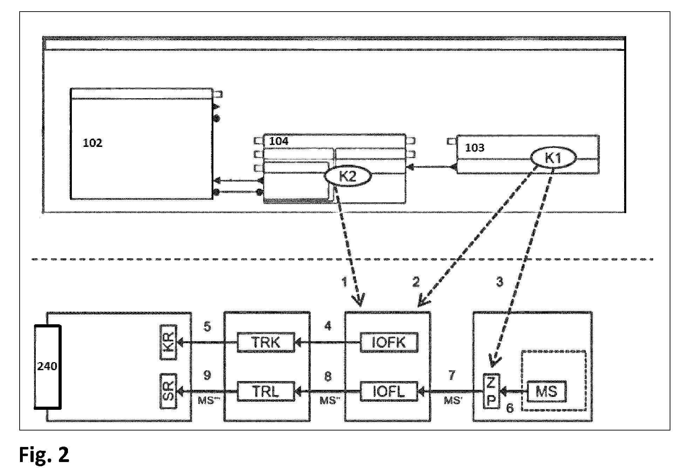

Für eine HIL Simulation (analog für eine Simulation eines Steuergeräts beim RCP) erfolgt die technische Realisierung des Signalpfades wie in Fig.2 am Beispiel einer Eingabe-/Ausgabe-Funktion (z.B. Ausgabe eines Modellsignals über einen Digital-Ausgang mit TTL-Spannungspegel) angedeutet.

Im Simulationsbetrieb, also bei angeschlossener Hardware und eingebundenem Verhaltensmodell wird zunächst für das eingebundene Verhaltensmodell über einen Modellcodegenerator ausführbarer Programmcode für das Verhaltensmodell generiert. Außerdem wird Code für die Eingabe-/Ausgabefunktion, bestehend aus einer Eingabe-/Ausgabe-Konfigurationsfunktion IOFK und einer Eingabe-/Ausgabe-Laufzeitfunktion IOFL, beide abhängig von den Konfigurationen K1 des Modell Ports 105 und K2 der Eingabe-/Ausgabe- Funktionsports erzeugt.

Während der Initialisierung einer Echtzeitapplikation für eine HIL-Simulation oder beim RCP ruft die Eingabe-/Ausgabekonfigurationsfunktion IOFK die Eingabe-/Ausgabe-Treiberkonfigurationsfunktion TRK mit entsprechenden Treiberparametern auf, um den Eingabe-/Ausgabetreiber entsprechend der Konfiguration K2 der Eingabe-/Ausgabefunktion zu initialisieren (4), z.B. auf Spannungspegel 0-5 Volt. Die Eingabe-/Ausgabe Treiberkonfigurationsfunktion TRK schreibt den Treiberparametern entsprechende Werte in ein oder mehrere Konfigurationsregister KR der Hardware (5).

Während des Simulationsbetriebs bei dem die Simulationstasks getriggert werden, also während der Laufzeit der generierten Echtzeitapplikation, wird ein Modellsignal von einer in den Modellcode generierten Zugriffspunktfunktion gelesen (6). Da die Zugriffspunktfunktion ZP abhängig von der Konfiguration K1 des Modell Ports generiert wurde, nimmt sie bezüglich des Modellsignals gegebenenfalls Umrechnungen oder Datentyp-Umwandlungen vor. Die Zugriffspunktfunktion ZP ruft die Eingabe-/Ausgabe Laufzeitfunktion IOFL auf und übergibt ihr dabei das (umgerechnete) Modellsignal MS'. Die Eingabe-/Ausgabe Laufzeitfunktion IOFL wurde abhängig von den Konfigurationen K1 des Modell Ports und K2 der Eingabe-/Ausgabe Funktion generiert, so dass sie bezüglich des Modellsignals gegebenenfalls weitere Umrechnungen oder Datentyp-Umwandlungen vornimmt. Die Eingabe-/Ausgabe Laufzeitfunktion IOFL ruft die Eingabe-/Ausgabe Treiber Laufzeitfunktion TRL auf und übergibt ihr dabei das (weiter umgerechnete) Modellsignal MS" (8). Die Eingabe-/Ausgabe Treiber Laufzeitfunktion TRA wandelt das Modellsignal MS" in die für das oder die Schreibregister SR der Hardware erforderliche Repräsentation MS"' um und schreibt MS"' in das oder die Register SR (9). Es können bei diesem Vorgang mehrere Register SR beteiligt sein, z.B. eines zum Setzen des Wertes und eines zum Aktivieren der Ausgabe des neu gesetzten Wertes.

Die Hardware gibt den dem Register-Inhalt SR entsprechenden Spannungspegel am Hardwarestecker 240.

Sollte bei der Konfiguration K1 oder K2 ein Fehler unterlaufen sein, kann dies dazu führen, dass der Spannungspegel am Stecker einen maximalen Spannungswert überschreitet und angeschlossene Hardware beschädigt.

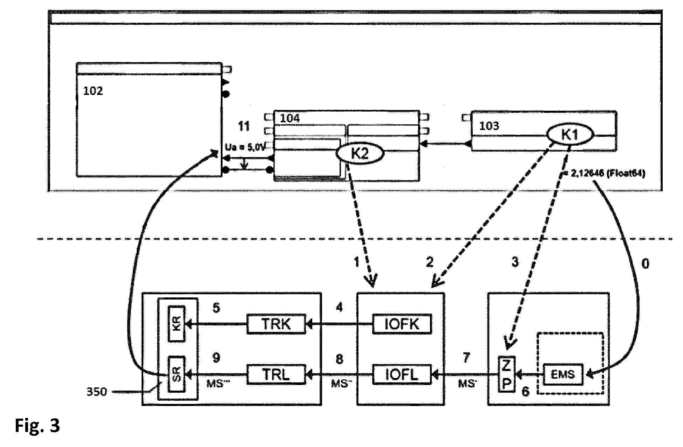

Um dies zu verhindern sieht die Vorrichtung zum Konfigurieren der Testvorrichtung einen Testmodus vor, wie er in Fig. 3 skizziert ist, und in welchem gezielt Testsignale an einem Ende des Signalpfades vorgegeben werden können und entsprechend der vorgegebenen Konfiguration entlang des Signalpfades propagiert werden können. Dabei können je nach Konfiguration mehrere Umwandlungen des Eingangssignals nötig sein, z.B. Datentypumwandlungen (typecasting). Das so erhaltene Testsignal bzw. Ergebnissignal wird am anderen Ende des Signalpfades zusammen mit relevanten Konfigurationsparametern ausgelesen und über die graphische Benutzeroberfläche angezeigt. Somit kann eine vorgegebene Konfiguration vor dem Simulationsbetrieb direkt überprüft werden, ohne zusätzliche Geräte zu benötigen oder manuell die einzelnen Ausgabesignale zu überprüfen.

Dafür wird nach erfolgter Konfiguration der jeweiligen Ports eines beliebigen Signalpfads im Testmodus an einem beliebigen Port ein Testwert vorgegeben, z.B. ein Wert für ein Modellsignal. Anstelle des vollständigen Verhaltensmodells wird dann lediglich ein Teil des Modellcodes erzeugt, und zwar derjenige Modellcode, der für die Verarbeitung des Testwertes erforderlich ist. Es wird somit lediglich Code für ein Ersatz-Modellsignal EMS generiert. Die Zugriffspunktfunktion ZP wird wie im Fall einer vollständigen Simulation generiert, wie gehabt abhängig von der Konfiguration K1 des Modell Ports. Auch die Generierung der Eingabe-/Ausgabefunktionen, beide abhängig von den Konfigurationen K1 des Modell Ports und K2 der I/O Funktion erfolgt analog zum Simulationsbetrieb. Im Unterschied zum voranstehend beschriebenen Simulationsbetrieb wird im Eingabe-/Ausgabetreiber eine Hardwaresimulationseinheit 350 aktiviert bzw. eingebunden, welche für die Eingabe-/Ausgabe-Treiberfunktionen TRK und TRL das Gegenstück darstellt. Diese Hardwaresimulationseinheit bildet das Verhalten der anzuschließenden Hardware nach. Ein simuliertes Konfigurationsregister SKR und ein simuliertes Schreibregister SSR sind aus Sicht der Eingabe-/Ausgabe-Treiberfunktionen TRK und TRL identisch zur realen Hardware zu verwenden.

Die Initialisierung des Testprogramms erfolgt analog zur Initialisierung des vollständigen Simulationsprogramms im Simulationsbetrieb.

Während der Laufzeit des Testprogramms wird der an einem beliebigen Port vorgegebene Testwert an die entsprechende Speicherstelle des Testprogramms geschrieben und das Testprogramm ausgehend von diesem Wert ausgeführt.

Bei Eingabe eines Testwertes auf Seiten des Modells wird der Testwert an die entsprechende Speicherstelle des entsprechenden Modellsignals im Testprogramm geschrieben. Der Zugriff auf dieses Ersatz-Modellsignal (EMS) erfolgt wie im Simulationsbetrieb über die Zugriffspunktfunktion ZP, welche das Testsignal über die Eingabe-/Ausgabefunktion, mit gegebenenfalls notwendigen Umrechnungen oder Datentypanpassungen, weitergibt. Die Eingabe-/Ausgabe-Treiberlaufzeitfunktion TRL wandelt das Modellsignal gegebenenfalls in die für das oder die simulierten Schreibregister SR der Hardwaresimulationseinheit 350 erforderliche Repräsentation um und schreibt es in das oder die simulierten Register SR (9). Es können bei diesem Vorgang mehrere simulierte Register SR beteiligt sein, z.B. eines zum Setzen des Wertes und eines zum Aktivieren der Ausgabe des neu gesetzten Wertes. Der so erhaltene Registereintrag, i.a. ein Spannungspegel, wird an die Testvorrichtung kommuniziert, welche ausgebildet ist, diesen in der graphischen Benutzeroberfläche am entsprechenden Port anzuzeigen. Dadurch lässt sich bereits beim Konfigurieren eines Signalpfads mit Hilfe der Testvorrichtung eine Überprüfung der Konfiguration vornehmen, ohne dass die mit der Testvorrichtung zu verbundene Hardware gefährdet wird oder extra Equipment benötigt wird. Ferner können auch Teilkonfigurationen überprüft werden, ohne z.B. ein vollständiges Verhaltensmodell wie es für den späteren Simulationsbetrieb nötig ist vorliegen zu haben.

Bei Eingabe eines Testwertes auf Seiten des Hardware-Ports erfolgt eine umgekehrte Signal-Propagation entsprechend des Falls der Eingabe eines Testwertes auf Seiten des Modells.

## Patentansprüche

1. Verfahren zum Konfigurieren einer in einer Testvorrichtung befindlichen Eingabe-/Ausgabeschnittstelle zum Verbinden einer Hardware mit einem in der Testvorrichtung vorhandenen Verhaltensmodell, wobei das Verfahren folgende Schritte aufweist:
Anzeigen einer graphischen Repräsentation der Eingabe-/Ausgabeschnittstelle als Signalpfad zwischen einem Hardware-Port zur Anbindung der Hardware und mindestens einem Modell-Port zum Anbinden des Verhaltensmodells über eine auswählbare Eingabe-/Ausgabefunktion;
Empfangen einer ersten Konfiguration für den Signalpfad;
Empfangen eines Testwertes vorgebbar an dem Hardware-Port oder dem Modell-Port des Signalpfads, insbesondere vorgebbar über die graphische Repräsentation des Hardware-Port oder dem Modell-Port;
Propagieren eines mit dem Testwert assoziierten Testsignals entlang des Signalpfads gemäß der ersten Konfiguration für den Signalpfad,
Anzeigen des propagierten Testsignals, insbesondere Anzeigen des propagierten Testsignals an der graphischen Repräsentation des Modell-Port beziehungsweise des Hardware-Port.

2. Verfahren nach Anspruch 1, wobei die Konfiguration des Signalpfades einen Datentyp eines Eingabe-/Ausgabewertes an dem Modell- und/oder Hardware-Port, und/oder eine Konvertierung des Datentyps und/oder eine Skalierung des Eingabe-/Ausgabewertes und/oder einen Spannungs-/Strombereich eines dem Eingabe-/Ausgabewert zugeordnetem Hardwarekanals umfasst.

3. Verfahren nach Anspruch 1, wobei das Propagieren umfasst:
Automatisches Codegenerieren aus dem Verhaltensmodell für eine Zugriffspunktfunktion gemäß der Signalpfadkonfiguration zum Zugreifen auf das Testsignal assoziiert mit dem Testwert,
automatisches Codegenerieren für die Eingabe-/Ausgabefunktion gemäß der Signalpfadkonfiguration,
Ausführen des generierten Codes ausgehend von dem Testwert, wobei das mit dem Testwert assoziierte Testsignal gemäß des generierten Codes propagiert wird, und Schreiben des propagierten Testsignals in einen definierten Speicher.

4. Verfahren nach Anspruch 3, wobei das Propagieren weiterhin eine Propagation des Testsignals in einen Treiber umfasst und wobei das Verfahren weiterhin ein Ausführen des dem Treiber zugeordneten Codes umfasst.

5. Verfahren nach Anspruch 3, wobei das Ausgeben umfasst:
Zugreifen auf das gespeicherte Testsignal und Zuordnen des Testsignals zum entsprechenden Port in der graphischen Repräsentation des Signalpfads.

6. Verfahren nach Anspruch 3, ferner umfassend:
Aktivieren einer Hardwaresimulationseinheit zum Empfangen eines Eingangs- oder Ausgangssignals; und wobei Ausführen des Codes umfasst:
wenn der Testwert am Modell-Port vorgegeben wurde,
Zugreifen auf den Testwert mittels der Zugriffspunktfunktion, welche ein entsprechendes Testsignal an die Eingabe-/Ausgabefunktion übergibt;
Verarbeitung des Testsignals durch die Eingabe-/Ausgabefunktion und
Schreiben des Testsignals in einen Speicher der Hardwaresimulationseinheit,
und nach dem Ausführen des Programmcodes Anzeigen des im Speicher der Hardwaresimulationseinheit befindlichen Testsignals am entsprechenden Hardware-Port in der graphischen Repräsentation der Eingabe-/Ausgabeschnittstelle;
oder wenn der Testwert am Hardware-Port vorgegeben wurde,
Schreiben des Testwertes in einen Speicher der Hardwaresimulationseinheit,
Auslesen des Testwertes durch die Eingabe-Ausgabefunktion, welche den Testwert als Testsignal an die Zugriffspunktfunktion übergibt;
Umwandeln des Testsignals durch die Zugriffspunktfunktion, wobei die Zugriffspunktfunktion das umgewandelte Testsignal in einen zweiten Speicher schreibt;
und nach dem Ausführen des Programmcodes Anzeigen des im zweiten Speicher befindlichen Testsignals am entsprechenden Modell-Port in der graphischen Repräsentation der Eingabe-/Ausgabeschnittstelle.

7. Verfahren nach Anspruch 1-5, wobei der Testwert ein zeitlich veränderliches Signal ist.

8. Vorrichtung zum Konfigurieren einer Eingabe-/Ausgabeschnittstelle einer Testvorrichtung zum Verbinden einer Hardware und eines Verhaltensmodell; wobei die Vorrichtung aufweist:
Mittel zum Anzeigen einer graphischen Repräsentation der Eingabe-/Ausgabeschnittstelle als Signalpfad zwischen einem Hardware-Port zur Anbindung der Hardware und mindestens einem Modell-Port zum Anbinden des Verhaltensmodells über eine auswählbare Eingabe-/Ausgabefunktion;
Mittel zum Konfigurieren der Eingabe-/Ausgabeschnittstelle;
Codegenerator zum Generieren ausführbaren Programmcodes für eine Zugriffspunktfunktion definiert im Verhaltensmodell und zum Generieren ausführbaren Programmcodes für die Eingabe-/Ausgabefunktion, wobei die Codegenerierung entsprechend der Signalpfadkonfiguration erfolgt;
**dadurch gekennzeichnet, dass** die Vorrichtung
Mittel zum Eingeben eines Testwertes an einem der Hardware- oder Modell-Ports aufweist, und dadurch dass, die Vorrichtung ausgebildet ist:
ein Signal basierend auf dem Testwert und gemäß dem generierten Code entlang des Signalpfads zu propagieren und am gegenüberliegenden Modell- oder Hardware-Port über eine graphische Benutzeroberfläche auszugeben.

9. Vorrichtung nach Anspruch 8, wobei die Konfiguration des Signalpfades einen Datentyp eines Eingabe-/Ausgabewertes an dem Modell- und/oder Hardware-Port und/oder eine Konvertierung des Datentyps und/oder eine Skalierung des Eingabe-/Ausgabewertes und/oder einen Spannungs-/Strombereich eines dem Eingabe-/Ausgabewert zugeordnetem Hardwarekanals umfasst.

10. Vorrichtung nach Anspruch 8 oder 9, wobei der Testwert ein zeitlich veränderliches Signal ist.

11. Vorrichtung nach einem der Ansprüche 8 bis 10, wobei die Vorrichtung ferner eine Hardwaresimulationseinheit aufweist, welche ein Register zum Speichern des Testwertes oder des propagierten Testsignals aufweist.

12. Verfahren nach Anspruch 1, wobei die Testvorrichtung ein Hardware-In-The-Loop Simulator oder ein Rapid-Control-Prototyping System ist.

13. Vorrichtung nach Anspruch 8, wobei die Testvorrichtung ein Hardware-In-The-Loop Simulator oder ein Rapid-Control-Prototyping System ist.
